(19) Europäisches Patentamt
European Patent Office
Office européen des brevets

(11) **EP 3 255 592 A1**

(12) **EUROPEAN PATENT APPLICATION**

(43) Date of publication:
**13.12.2017 Bulletin 2017/50**

(51) Int Cl.:
**G06Q 10/04** *(2012.01)*　　**G06Q 30/02** *(2012.01)*

(21) Application number: **16173560.0**

(22) Date of filing: **08.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Red Bull Media House North America
Santa Monica, CA 90404 (US)**

(72) Inventors:
• **Cudrigh, Lukas
Santa Monica, CA California 90404 (US)**
• **Tomochko, Paul
Santa Monica, CA California 90404 (US)**
• **Rutherford, Scott
Santa Monica, CA California 90404 (US)**
• **Karim, Navine
Santa Monica, CA California 90404 (US)**
• **Heisser, Marcus
Santa Monica, CA California 90404 (US)**
• **Setzer, Cam
Santa Monica, CA California 90404 (US)**
• **Chandler, Geoff
Santa Monica, CA California 90404 (US)**

(74) Representative: **Grünecker Patent- und
Rechtsanwälte
PartG mbB
Leopoldstraße 4
80802 München (DE)**

(54) **SYSTEM FOR MEASURING THE PERFORMANCE OF MUSIC ARTISTS ON DIGITAL PLATFORMS**

(57)　The invention provides a concept for measuring, classifying and ranking the success of an artist in web based music industry based on their performance across digital media platforms and social networks. The concept comprises obtaining by a centralized online platform, for an artist, play count data from digital music streaming and download services and fan count data from social media networks. The play count data indicate a count of interactions by users of the third party online platform with content of the artist that is stored on the third party online platform. The fan count data indicate a count of links between content of the artist that is stored on the third party online platform and users of the third party online platform. Based on the data obtained from third party platforms, numerical scores, such as an Artist Growth or Artist Growth Score, that indicate how a music artist is performing is calculated and compared to their performance against a group of their peers.

FIG. 1 - Data Collection

EP 3 255 592 A1

**Description**

1. BACKGROUND

The rise of the Internet, digital platforms and other new forms of technology has caused a major transformation of the music industry. Traditionally, the success of an artist was measured through the analysis of the artist's physical unit sales and the amount of spins through terrestrial radio. The number of units sold for vinyl records, cassettes and compact discs (CDs) has decreased steadily over the past 20 years as new digital formats, services, and technologies have been introduced to the marketplace. Additionally, terrestrial radio listenership continues to shrink as consumers adopt new online services for discovering and listening to music.

Digital download stores, including iTunes and Amazon Music, offer both singles and full-length album sales, which compete directly with the sale of physical units, like CDs. Digital music streaming products offer several different models of listening including free, ad-supported non-interactive experiences, to subscription-based services that enable users to stream an unlimited amount of music, on-demand, through Internet connected devices. Examples of these types of digital media platforms include Spotify, Pandora, Apple Music, and Google Play. Furthermore, music fans increasingly adopt social media platforms, such as Facebook, Twitter, Snapchat and Instagram to follow artists and discover new music. Artists utilize these social networks to build a fan base and promote media content, such as video clips, audio files, pictures, messages, tweets, etc. Many platforms, like SoundCloud and YouTube, enable both media and social interactions.

The rapid growth of digital download storefronts, streaming services and social networks has created a new paradigm for measuring the success of an artist. Hence, the traditional methods for measuring the success of an artist need to evolve in order to accommodate new listening behaviors and habits. Analyzing all these different online music and social platforms creates a new level of complexity when comparing, ranking and classifying music artists. The following sections summarize a new invention for measuring the performance of music artists on digital platforms.

2. SUMMARY

The present invention is a system for measuring, ranking and classifying music artists based on their performance across digital media platforms and social networks. The objective of the invention is to apply a computer-implemented method to collect media consumption data (PLAYS) from digital music streaming and download services and fan growth data (FANS) from social media networks to calculate a numerical score that indicates how a music artist is performing and to compare their performance against a group of their peers.

In some examples, the system automatically communicates with the one or more digital media platforms and/or social networks to obtain the media consumption data and/or fan growth data. In such examples, the centralized system can communicate with the one or more digital media platforms and/or social networks at set time intervals to receive the media consumption data and/or fan growth data and/or update the media consumption data and/or fan growth data. For instance, the system can communicate with the one or more digital media platforms per minute, hour, day, etc. to receive and/or update the media consumption data and/or fan growth data. Additionally or alternatively, the system can continuously communicate with the one or more digital media platforms to receive and/or update the media consumption data and/or fan growth data. By automatically communicating with the one or more digital media platforms and/or social networks, in some examples, the system does not require operator input each time to obtain the media consumption data and/or fan growth data.

Once the raw data for PLAYS and FANS data is collected and recorded, the system applies a series of advanced equations to calculate a numerical score, named the Artist Digital Footprint (ADF). In order to calculate the ADF, the system utilizes the RAW FAN COUNT (RFC) and RAW PLAY COUNT (RPC) collected from the digital platforms to determine the size of the audience the artists has developed. The ADF takes into consideration the value of RFC compared to RPC. This is achieved by applying a normalization factor, which is the ratio of the lognormal fit of RFC and RPC spanning a representative set of music artists. The ADF is used to evaluate the size of an artist's audience and performance at a certain point of time. For a music business, the ADF provides a standardized measure to rank and compare the performance of a portfolio of music artists within a predetermined group of artists. This includes generating charts to determine the relative popularity of their artists.

The same RFC and RPC inputs are applied to calculate the Artist Growth (AG) for a single artist or a group of artists. The AG for single music artist is produced, by calculating the percentage change of the weighted scores of RFC and RPC over a specific period of time. In order to determine the combined AG for a group of music artists, the percentage score is determined by calculating the weighted average percentage change for all the artists in a group. In order to calculate a meaningful growth rate for a group of artists, artist growth scores below a certain threshold will have to be eliminated. This threshold is defined through minimum RFC and RPC counts required by artist to be included in the AG for a group of artists. Music artists consider the AG as the primary measure of performance of their activities including record releases, gigs and promotional activities. A music business applies the AG to measure and track the performance of their artists and their artist portfolios across genres, geographies or the portfolio as a whole. Another calculation used in the invention is Artist Growth Score (AGS), which is a score that indicates an artist whose RFC and RPC are growing faster than others. This involves calculating a score for an individual artist's growth over multiple timeframes and then comparing the score with a group of artists. AGS signals that an artist is possibly "breaking" or "trending" and their popularity is rapidly increasing.

In some examples, the method outputs the AGS and/or ADF based on the artist, artist portfolios across genres, geographies or the portfolio as a whole. For instance, the system can rank an artist within the group of artists using the genre(s), geography(ies), portfolio of the artist, etc. The system can then output a ranking for the artist within the group of artists on a display. In some examples, the output includes a list of artists that includes the artist and one or more of the artists from the group of artists. The system can create the list of artists using the ranking for the artist and rankings for the one or more artists. In some examples, when causing display of the list of artists, the system can cause the output to display a portion of the list that includes the artist.

For instance, the system can output the list of artists based on the capabilities (e.g., screen size) of the display. For example, a display that outputs the list of artists, AGS, and/or the ADF can include a limited screen size that cannot display the entire list of artists. As such, the system can output a sublist of breaking or trending artists by displaying the portion of the list that includes the artist based on the AGS and/or ADF for the artist. By outputting the portion of the list, a user does not have to scroll through the list of artists in order to determine where the artist is ranked within the list of artists.

## 3. BRIEF DESCRIPTION OF THE DRAWINGS

The features of the present invention will be more fully disclosed by the following detailed descriptions of the preferred embodiments of the invention, which is to be considered together with the accompanying drawings, wherein:

FIG. 1 is a diagram of a centralized online platform that communicates with a plurality of third party platforms, while also aggregating RAW FAN COUNT (RFC) and RAW PLAY COUNT (RPC) data inputs that are used to calculate ADF, AG, and AGS;

FIG. 2 is a flow diagram of a method for computing the ADF for an individual artist, according to an embodiment of the claimed invention;

FIG. 3a and 3b illustrate log normal distributions of user interactions according to two different user interaction categories, RFC and RPC, according to an embodiment of the claimed invention;

FIG. 4 is an example of a scatterplot of ADF Score, used to rank and compare ADF Scores in a group;

FIG. 5a is a flow diagram of a method for computing the AG for an individual artist, according to an embodiment of the claimed invention;

FIG. 5b is a flow diagram of a method for computing the AG for a group of artists, according to an embodiment of the claimed invention;

FIG. 6 is a flow diagram of a method for computing the AGS for an artist, according to an embodiment of the claimed invention; and

FIG. 7 is a block diagram depicting an example computing device of a centralized platform

## 4. DETAILED DESCRIPTION OF THE INVENTION

### 4.1 Data Collection

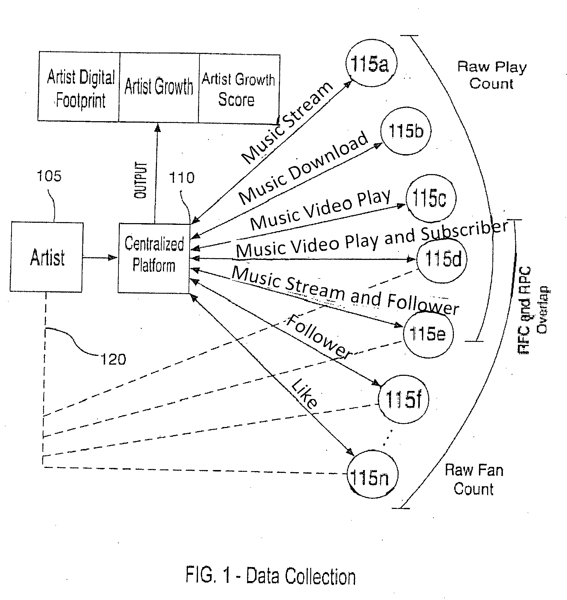

At the core of the invention is a centralized online platform 110 that focuses on collecting data inputs from digital media platforms 115a - 115n and social networks. FIG. 1 represents the centralized online platform 110 that communicates with a plurality of third party platforms 115 to aggregate RAW FAN COUNT (RFC) and RAW PLAY COUNT (RPC) data inputs that are used to calculate ADF, AG, and AGS.

In some examples, the centralized platform 110 automatically communicates with the one or more online platforms 115 to obtain the fan RFC and RPC data inputs that are used to calculate ADF, AG, and AGS. In such examples, the centralized platform 110 can communicate with the one or more online platforms 115 at set time intervals to receive the data and/or update the data. For instance, the centralized platform 110 can communicate with the one or more online platforms 115 every minute, hour, day, etc. to receive and/or update the data. Additionally or alternatively, the centralized platform 110 can continuously communicate with the one or more online platforms 115 to receive and/or update the data of or for an artist 105. By automatically communicating with the one or more online platforms 115, in some examples, the centralized platform 110 does not require input to obtain the data.

*Data Inputs Defined*

RAW FAN COUNT is defined as the total amount of followers (Twitter, Instagram, SoundCloud), likes (Facebook), subscribers (YouTube) that an artist 105 has acquired on social networks 115. The RFC represents the artist's total addressable fan base on social networks 115. During the onboarding process, the artist 105 connects their social accounts to the centralized online platform 110. The centralized online platform 110 obtains the raw count/number of followers/likes/subs from all connected social accounts via open APIs with the social networks 115.

RAW PLAY COUNT is defined as the total amount of music track streams (Spotify, Pandora, SoundCloud), music video streams (YouTube) and music track downloads (iTunes, GooglePlay). The RPC represents the total amount of PLAYS that happen on the digital media platforms. Artist music tracks and music videos are distributed and tracked on digital music platforms in 3 ways:

- Digital music distribution service (Fuga, InGrooves, etc.) and tracked via their reporting functions/systems
- Direct upload 120 by artist 105 or business (artist management, record label) and tracked by artists 105 or business connecting their music platform accounts to the centralize online platform 110
- Music track is used within user generated content (UGC) video content and tracked by audio fingerprinting technology to inform centralized online platform when a track has been played within a UGC video

4.2 Equations for Calculating and Ranking an Artist's Performance on Digital Platforms

This invention produces 3 numerical indicators to determine how well an artist is performing on digital platforms:

• **Artist Digital Footprint (ADF)**

ADF measures the overall digital audience and plays of an artist 105 or pool of artists at a given time. The equation produces a score that can provide valuable insight into the size of the artist's addressable digital audience. After RFC and RPC is collected from the digital platforms, the number can be converted to fit into a scale and used to compare the size of their digital footprint to other artists. An artist 105 with a lower ADF Score (i.e. ADF = 2) has a smaller amount of RFC and RPC than an artist with a higher ADF Score (i.e. ADF = 10).

• **Artist Growth (AG)**

AG measures the rate of growth of RFC and RPC between two moments in time for an individual artist 105 or a group of artists. This is used to indicate the weighted percentage change of an individual's RFC and RPC, or a weighted percentage change of a group's RFC and RPC growth of a portfolio of artists.

• **Artist Growth Score (AGS)**

AGS is a score that indicates artists whose RFC and RPC are growing faster than others and could possibly be "breaking". This involves calculating a score for an individual artist's 105 growth over several different timeframes (short, long, etc.) and then comparing the score with a group of other artists. AGS could be used to rank artist 105 in their program, with the top rank having the fastest growth rate.

4.3 Artist Digital Footprint

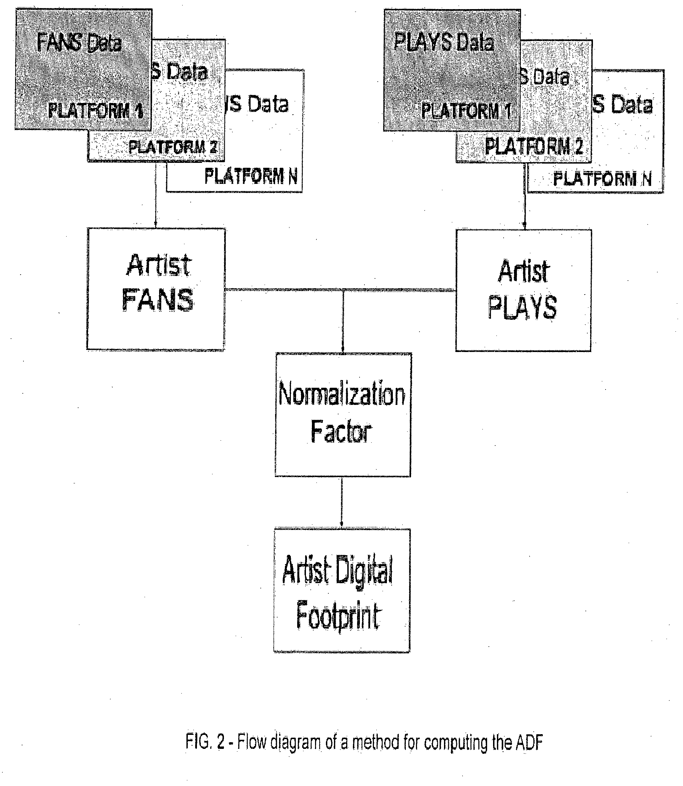

The Artist Digital Footprint (ADF) accounts for the relationship between individual artist's FANS (the number of people an artist is connected with across all social networks) and PLAYS (the number of plays, streams, and downloads across all digital media platforms). This concept is indicated by FIG. 2.

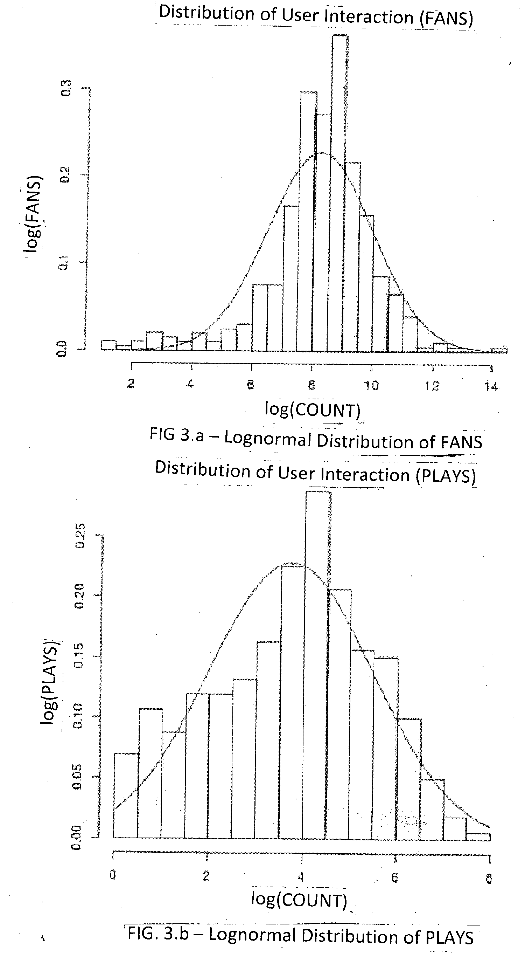

Initial analysis of the data for a relevant sample set of artists showed that the level of activity on digital media platforms (the source of RPC) tended to be an order of magnitude larger than the comparative activity on social networks (the source of RFC). It also revealed the lognormal nature of the distribution of the inbound data. To account for the size discrepancy and allow the data from social networks and digital media platforms 115 to be sensibly combined, a Normalization Factor is calculated as a ratio of the means of the lognormal fits of the RFC and RPC for all artists of a given sample. Examples of lognormal distributions of FANS and lognormal distributions of PLAYS are shown in FIGs. 3.a and 3.b.

**Normalization Factor**

Prior to executing the full equation for the ADF, the Normalization Factor may be calculated as follows:

Determine a sample set of artists 105 that represents the music industry or subsector (i.e. a genre) at a given time. For the given set of artists, calculate the mean of the lognormal distribution of RAW FAN COUNT ($\mu$(RFC)) and the mean of the lognormal distribution of RAW PLAY COUNT ($\mu$(RPC)). Last, to calculate the Normalization Factor, divide them as follows:

$$\text{Normalization Factor} = \frac{\mu(RFC)}{\mu(RPC)}$$

**Artist Digital Footprint Calculation**

The inventions applies the following methodology for calculating ADF:

1. For a minimum set of social media networks 115, calculate RFC
2. For a minimum set of digital media platforms 115, calculate RPC
3. To normalize, RPC is multiplied by the Normalization Factor

The Digital Footprint score, therefore, represents a combined measurement of an artist's online music distribution and marketing network at a given point in time, as per the following formula:

$$Artist\ Digital\ Footprint = \sum_{i=1}^{N\ social\ networks} RFC_i + \frac{\mu(RFC)}{\mu(RPC)} \times \sum_{1}^{N\ digital\ services} RPC_i$$

where:

$RFC_i$ (RAW FAN COUNT) = Number of FANS an artist is connected with on the social media network i

where:

$RPC_i$ (RAW PLAY COUNT) = Number of plays, views, streams, and downloads of artist media on the digital media service i

**ADF Score**

After the raw ADF number is calculated, the number is transformed into a contextual score that can be used to gauge the amount of normalized RFC and RPC an artist 105 has compared to another artist. For example, the contextual score for the ADF could fit inside a scale of 1-10, where the lowest number represents an artist that is just starting their career with a very small or local fan base, and conversely, the highest number represents an artist 105 that has a large social following and has developed a global audience.

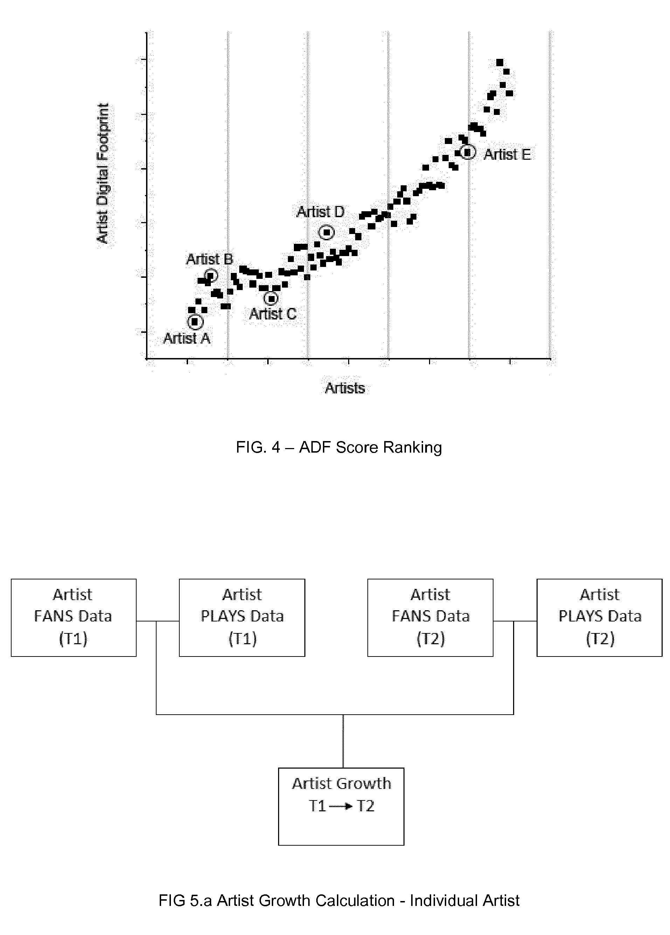

This scale can also be used to help an aspiring artist understand the requirements to become a mainstream artist. For example, as shown in FIG. 4, the ADF can inform an aspiring artist how their current RFC and RPC compare to an artist who has a national audience.

**Artist Digital Footprint Applications**

*Individual Artist*

For a single artist 105, the ADF Score will provide a contextual ranking of that artist's (digital) fan base/audience within a relevant group of other artists (e.g., select artist portfolio, overall industry, etc.) and can be used to inform and encourage actions that drive further ADF growth.

*Group of Artists*

When looking at a group of artists 105, the ADF can be used to rank or categorize artists 105 in a way that accounts for digitization of the modern music experience. Traditional ranking systems typically use downloads or physical album sales as their exclusive indicator of performance. The ADF accounts for additional quantifiable variables, such as RFC on social media networks and RPC on digital media platforms 115.

From a business perspective, artist rankings and categorization by ADF can be used to support artist portfolio management efforts and decisions including artist evaluation and selection, levels of investment into an artist and risk management (i.e., which artists to drop).

## 4.4 ARTIST GROWTH

The Artist Growth (AG) calculation provides insight into the change in the RFC and RPC of an individual artist, or a group of artists, over a specified period of time. When applied to a single artist 105 it collapses to the simple combined average of the percentage change of their RFC and RPC; applied to a group the result is the weighted percentage change. AG is a key metric for tracking the progression and trending of artists in the music industry. By examining changes in RFC and RPC data for an individual artist 105, or a group of artists, over a specified period of time, AG provides significant insight into the performance and advancement of a music career.

### AG Calculation - Individual Artist

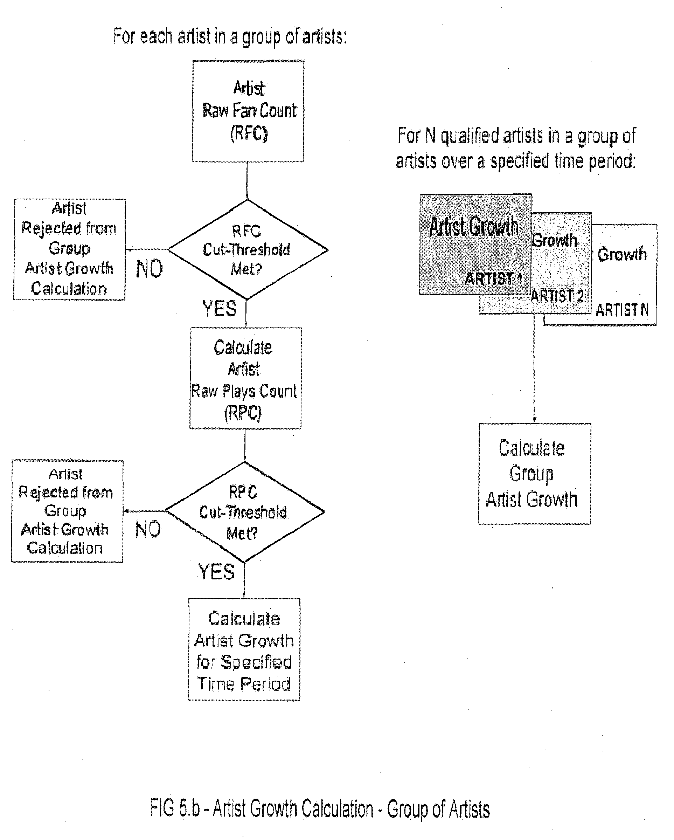

FIG. 5.a shows a concept of calculating the artist growth for an individual artist 105. AG for an individual artist 105 is found by calculating the average of the weighted percentage change of their RFC and RPC. Weights in this calculation ($\omega(RFC_i)$ and $\omega(RPC_i)$) are used to ensure that when calculating AG, the actual size of an artist's presence on each social media network 115 and digital media service is included in the equation. For example, over the course of a month, if an artist 105 increases their Facebook fan base from 50,000 to 100,000 followers and increases their Twitter fan base from 50 to 100 followers, the % change on each platform is equivalent. However, the increase in the actual number of followers over that month on Facebook is a much greater achievement. In order to accommodate for this disparity, within the Artist Growth calculation for each artist, changes on each network and service are weighted in proportion to their size relative to each other.

First, the weighted percentage change for all the artist's social media networks, *ΔRFC,* is found:

$$\Delta RFC = \sum_{i=1}^{n\ social\ networks} \omega\left(RFC_i\right) \times \Delta RFC_i$$

where the weight of a given network, *ω(RFC$_i$)*, is equal to the ratio of the RFC on the network at time *T2* to the sum of all RFC on all of the artist's social networks at time *T2:*

$$\omega(RFC_i\ ) = \frac{RFC_{i\ (T2)}}{\sum_{i=1}^{n} RFC_{i\ (T2)}}$$

and the change in RFC on a given network, *ΔRFC$_i$,* between time *T1* and *T2* is:

$$\Delta RFC_i = \frac{RFC_{i\ (T2)} - RFC_{i\ (T1)}}{RFC_{i\ (T1)}}$$

where $RFC_i$ is equal to the audience for an artist on a social network as defined above in the ADF Calculation.

Then, using the same methodology above, the weighted percentage change for each digital media service, *ΔRPC,* is found:

$$\Delta RPC = \sum_{i=1}^{n\ digital\ services} \omega\,(RPC_i)\,\times\,\Delta RPC_i$$

where, for each digital media service measured between times *T1* and *T2:*

$$\omega(RPC_i) = \frac{RPC_{i\ (T2)}}{\sum_{i=1}^{n} RPC_{i\ (T2)}}$$

and

$$\Delta RPC_i = \frac{RPC_{i\ (T2)} - RPC_{i\ (T1)}}{RPC_{i\ (T1)}}$$

where $RPC_i$ is equal to the consumption of artist content on a digital media service as defined above in the ADF Calculation.

Finally these two numbers are combined using a simple average to produce Artist Growth for an individual artist within the defined time period:

$$\partial^{ARTIST} = \frac{\Delta RPC + \Delta RFC}{2}$$

**AG Calculation - Group of Artists**

FIG. 5.b shows a concept of calculating the artist growth for a group of artists. Growth for a group of artists is the weighted average percentage change over a given time period of all artists in the target group. In order to reduce the impact of outliers, some basic cuts are applied to the inbound data. The first of these cuts is the RFC Cut Threshold, a configurable lower bound requirement of FANS (ex. 100) across all social media networks. Secondly, the Normalization Factor (as described above) is used to determine the equivalent lower bound requirement for an artist's PLAYS across all digital media services, also referred to as the RPC Cut Threshold.

$$RPC\ Cut\ Threshold = \frac{\mu(RFC)}{\mu(RPC)} \times RFC\ Cut\ Threshold$$

Once the group of qualified artists has been determined, the AG for the group over the given time period can be calculated by simply taking the sum of the individual artists' growth as outlined above and dividing that number by the total number of artists:

$$\partial^{GROUP} = \frac{\sum_{i=1}^{n\ Artists} \partial_i}{\#\ of\ Artists}$$

**Artist Growth Applications**

*Individual Artists*

For a single artist 105, the AG calculation will provide a near-real time view of their pace of growth over time. Also, AG could be used to measure the performance of any promotional or marketing campaigns targeted at increasing exposure for the artist. This can include promoting the release of a new track, or an upcoming gig.

*Group or Groups of Artists*

AG could be used to measure the performance and effectiveness of program focused on developing audiences for emerging music artists 105. First, the equation is used to calculate the individual AG for each artist 105 in the program.

Then, the average AG for all the artists 105 in the program is calculated to measure the effectiveness of the program as a whole.

An example of this could include setting a target of 3x ADF growth for all the artists 105 in the program, over a period of one year. If the average AG for all artists in the program at the end of the year is 3 times greater than at the start of the year, we could determine that the program is successful in driving both RFC and RPC for the artist, thus growing their overall addressable digital audience.

4.5 ARTIST GROWTH SCORE

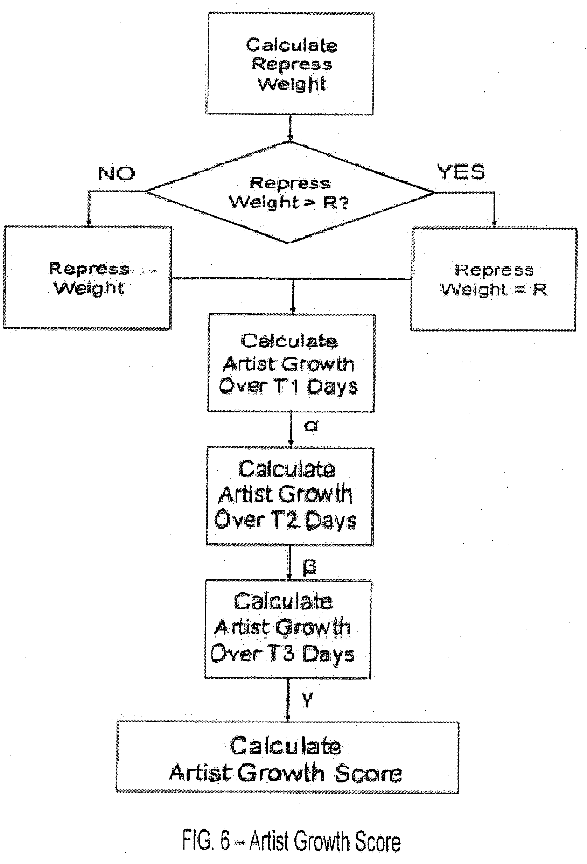

The Artist Growth Score (AGS) is a numerical score that indicates when an artist 105 is growing their RFC and RPC faster than other artists in a group or cluster. The AGS identifies when an artist is "breaking" or "trending", which can be defined as when an artist experiences explosive growth in RFC and RPC when compared to other artists in the group. Identifying artists 105 who are about to "break" involves taking a group of artists, measuring each artist's rate of growth over several different timeframes (short, long, etc.) and then comparing that with the rest of the group. The concept of the artist growth score is further illustrated in FIG. 6.

**AGS Calculation - Group of Artists**

The AGS for a group of artists 105 is calculated by using a weighted average of the change in RFC and RPC over 3 preceding timeframes: short term, medium term, and long term (ex. 7 days, 30 days, 180 days respectively):

$$\theta^{ARTIST} = (\alpha\Delta^7 + \beta\Delta^{30} + \gamma\Delta^{180}) \times \omega^{Repress}$$

As outlined above, the AG over n days ($\Delta^n$) is defined as:

$$\Delta^n = \frac{\Delta^n(RFC) + \Delta^n(RPC)}{2}$$

where the individual deltas are calculated using:

$$\Delta^n(RFC) = \frac{RFC_{now} - RFC_{(now-n)}}{RFC_{(now-n)}}$$

where $RFC_{now}$ and $RFC_{now-n}$ are equal to weighted audiences for an artist on a social media network at two different points in time as defined above in the ADF Calculation, and

$$\Delta^n(RPC) = \frac{RPC_{now} - RPC_{(now-n)}}{RPC_{(now-n)}}$$

where $RPC_{now}$ and $RPC_{now-n}$ are equal to the weighted consumption of artist content on a digital media service at two different points in time as defined above in the ADF Calculation.

The formula also has three tuning parameters ($\alpha, \beta, \gamma$) used to apply weights to each time period. The tuning parameters allow for greater importance to be placed on one time period over another. Each parameter can be adjusted to observe the sensitivity of the results, so long as they add up to 1 or 100%.

The final input into the equation is the Repress weight, which serves two purposes:

1. It establishes an upper-bound cap that prevents artists with a significantly larger ADF as compared to the rest of the group from having an elevated AGS merely because of their ADF size. The presence of this cap ensures that all artists 105 in the group can be evaluated on a level playing field.

2. It provides a boost to the AGS of artists who have been sustaining growth over time with a larger ADF. Growing RFC, for example, from 10,000 to 20,000 is more difficult than going from 1,000 to 2,000 over the same time period even though the AG is 100% in both situations and is accommodated as such by the Repress weight.

The Repress weight for an individual artist 105 within a group of n artists is calculated as follows:

$$\omega^{Repress} = \frac{Artist\ Digital\ Footprint}{\sum_{i=1}^{n} Artist\ Digital\ Footprint_i}$$

and

$$\omega^{Repress} = \begin{cases} \omega^{Repress}\ if\ \omega^{Repress} \leq R \\ R \qquad if\ \omega^{Repress} > R \end{cases}$$

where

R represents a reasonable upper-bound cap for the amount of influence a single artist's score can have on the group as a whole (ex. R = 0.03). The R variable can be adjusted to observe the sensitivity of the results when evaluating a group of artists 105.

**Artist Growth Score Applications**

*Group of Artists*

Within a group of artists, the AGS calculation will identify which artists are trending either upwards or downwards in terms of online fan growth. It can also be used to identify a "breaking" or "trending" artist at an early stage (not possible using manual methods). One application is to use AGS to rank artists on a daily basis. Artists 105 whose AGS increases will be flagged as "trending artists" which represents that the artist RFC and RPC are growing at a faster rate than other artists in the pool.

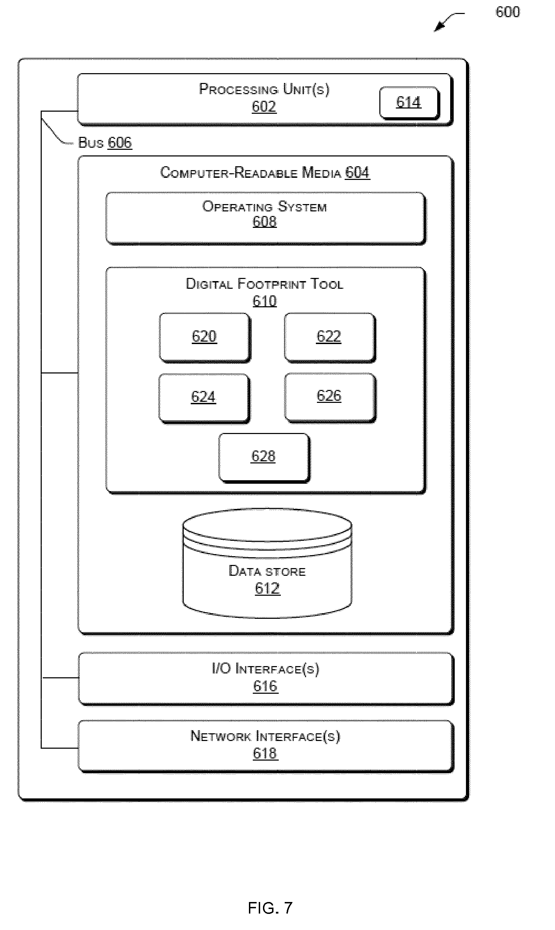

FIG. 7 is a block diagram depicting an example computing device 600 of centralized platform 110 from FIG. 1. Device 600 can belong to a variety of categories or classes of devices such as traditional server-type devices, desktop computer-type devices, mobile devices, special purpose-type devices, embedded-type devices, and/or wearable-type devices. Thus, although illustrated as desktop computers, device 600 can include a diverse variety of device types and are not limited to a particular type of device. Device 600 can represent, but are not limited to, desktop computers, server computers, web-server computers, personal computers, mobile computers, laptop computers, tablet computers, thin clients, terminals, personal data assistants (PDAs), work stations, integrated components for inclusion in a computing device, or any other sort of computing device.

Device 600 can include any type of computing device having one or more processing unit(s) 602 operably connected to computer-readable media 604 such as via a bus 606, which in some instances can include one or more of a system bus, a data bus, an address bus, a PCI bus, a Mini-PCI bus, and any variety of local, peripheral, and/or independent buses. Executable instructions stored on computer-readable media 604 can include, for example, an operating system 608, a digital footprint tool 610, and other modules, programs, or applications that are loadable and executable by processing units(s) 602. Alternatively, or in addition, the functionality described herein can be performed, at least in part, by one or more hardware logic components such as accelerators. For example, and without limitation, illustrative types of hardware logic components that can be used include Field-programmable Gate Arrays (FPGAs), Application-specific Integrated Circuits (ASICs), Application -specific Standard Products (ASSPs), System-on-a-chip systems (SOCs), Complex Programmable Logic Devices (CPLDs), etc. For example, an accelerator can represent a hybrid device, such as one from ZYLEX or ALTERA that includes a CPU course embedded in an FPGA fabric.

In the illustrated example, computer-readable media 604 also includes a data store 612. In some examples, data store 612 includes data storage such as a database, data warehouse, a relational database, or other type of structured or unstructured data storage. Data store 612 can store data for the operations of processes, applications, components, and/or modules stored in computer-readable media 604 and/or executed by processing unit(s) 602. Alternately, some or all of the above-referenced data can be stored on separate memories 614 on board one or more processing unit(s) 602 such as a memory on board a CPU-type processor, a GPU-type processor, an FPGA-type accelerator, a DSP-type accelerator, and/or another accelerator.

Device 600 can further include one or more input/output (I/O) interfaces 616 to allow device 600 to communicate with input/output devices such as user input devices including peripheral input devices (e.g., a keyboard, a mouse, a pen, a game controller, a voice input device, a touch input device, a gestural input device, and the like) and/or output devices including peripheral output devices (e.g., a display, a printer, audio speakers, a haptic output, and the like).

Device 600 can also include one or more network interfaces 618 to enable communications between device 600 and other networked devices, such as third party platforms 115 from FIG. 1. Such network interface(s) 618 can include one or more network interface controllers (NICs) or other types of transceiver devices to send and receive communications over a network.

In the illustrated example, digital footprint tool 610 can include one or more modules and/or APIs, which are illustrated as blocks 620, 622, 624, 626, and 628, although this is just an example, and the number can vary higher or lower. Functionality described associated with blocks 620, 622, 624, 626, 628 can be combined to be performed by a fewer number of modules and/or APIs or it can be split and performed by a larger number of modules and/or APIs. For example, block 620 can represent a music/content distribution module with logic to program processing unit 602 of device 600 for uploading and distributing artist music and content across a globally integrated media distribution network (e.g., the third party platforms 115 from FIG. 1). Block 622 can represent a music/content promotion module with logic to program processing unit 602 of device 600 for providing artists with digital marketing tools for executing online promotional campaigns for the artist's music and related content.

Block 624 can represent a live-show promotion module with logic to program processing unit 602 of device 600 for providing artists with digital marketing tools for executing online promotional campaigns for an artist's live shows, tours, and big moments (e.g., music festival or TV appearance).

Block 626 can represent a fan engagement module with logic to program processing unit 602 of device 600 for providing an artist with a tool that helps the artist identify and better engage the artist's fan base. For instance, fan engagement module 626 can obtain information about top fans (determined by music and content engagement, live show attendance, unsolicited online sharing and promotion of artist content, etc.), where the information can be used to inform promotional campaigns (music/content, live shows), plan live shows/tours and propel an ongoing conversation with fans within local and online music scenes. Direct and authentic artist-to-fan "rewards" (e.g., upgraded access to content, live shows) delivered to top fans drives social currency and motivates fans to bolster further artist support.

Block 628 can represent a profile management module with logic to program processing unit 602 of device 600 for creating and updating public artist profiles, band member administration and overall name and likeness, and extensions to any relevant music platforms, social channels, etc.

Computer-readable media 604 can include storage media and/or signal media. In some examples, computer-readable media 604 is specifically described as non-volatile memory. Otherwise, storage media includes tangible storage units such as volatile memory, nonvolatile memory, and/or other persistent and/or auxiliary storage media, removable and non-removable storage media implemented in any method or technology for storage of information such as computer-readable instructions, data structures, program modules, or other data. Storage media includes tangible or physical forms of media included in a device or hardware component that is part of a device or external to a device, including but not limited to random-access memory (RAM), static random-access memory (SRAM), dynamic random-access memory (DRAM), phase change memory (PRAM), read-only memory (ROM), erasable programmable read-only memory (EPROM), electrically erasable programmable read-only memory (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or memories, storage, devices, and/or storage media that can be used to store and maintain information for access by a corresponding computing device.

In contrast to storage media, signal media can embody computer-readable instructions, data structures, program modules, or other data in a modulated data signal, such as a carrier wave, or other transmission mechanism. As defined herein, storage media does not include signal media.

4.6 GLOSSARY OF INPUT VARIABLES

**Digital Footprint Variables**

| $RFC_i$ | Raw Fan Count - Number of persons an artist is connected with on a social media network |
|---|---|
| $RPC_i$ | Raw Play Count - Number of plays, views, streams, and downloads of artist media content on the digital media service |
| $\mu(RFC)$ | Mean of the lognormal distribution of the total number of fans for active artists in the music industry |
| $\mu(RPC)$ | Mean of the lognormal distribution of the total number of media content plays, streams and downloads for active artists in the music industry |

**Artist Growth Variables**

| $\Delta RFC$ | Weighted percentage change of an artist's audience across all social media networks between two points in time (T1, T2) |
|---|---|
| $\omega(RFC_i)$ | Weight of a singular social network as compared to the other social media networks an artist is connected to at a specific point in time |
| $\Delta RFC$ | Percentage change of an artist's audience on a singular social media network between two points in time (T1, T2) |
| $\Delta RPC$ | Weighted percentage change of the consumption of an artist's content across all digital media services between two points in time (T1, T2) |
| $\omega(RPC_i)$ | Weight of a singular digital media service as compared to the other digital media services through which an artist's content is consumed at a specific time |
| $\Delta RPC_i =$ | Percentage change of the consumption of an artist's content on a singular digital media service between two times (T1, T2) |
| $\partial^{ARTIST}$ | Artist Growth for a single artist between two points in time (T1, T2) |
| $\partial^{GROUP}$ | Artist Growth for a group of artists between two points in time (T1, T2) |

**Artist Growth Score Variables**

| $\theta^{ARTIST}$ | Artist Growth Score for a single artist |
|---|---|
| $\Delta^n$ | Artist Growth for a single artist over n days |
| $\Delta^n(RFC)$ | Weighted percentage change of an artist's audience across all social media networks between the current day and n days prior to the current day |
| $\Delta^n(RPC)$ | Weighted percentage change of the consumption of an artist's content across all digital media services between the current day and n days prior to the current day |
| $\alpha, \beta, \gamma$ | Tuning parameters used to apply weights to the time periods defined in the Artist Growth Score calculation |
| $\omega^{Repress}$ | Repress weight - weight of a individual artist's Digital Footprint as compared to the other artists in a group of artists being evaluated at a specific point in time |
| R | Reasonable Repress weight for the amount of influence a single artist's Digital Footprint can have on the group as a whole. |

**Claims**

1. A computer-implemented method for classifying an artist in web based music industry, the method comprising:

obtaining by a centralized online platform, for an artist, play count data from a third party online platform, the play count data indicating a count of interactions by users of the third party online platform with content of the artist that is stored on the third party online platform;
obtaining by the centralized online platform, for the artist, fan count data from a third party online platform, the fan count data indicating a count of links between content of the artist that is stored on the third party online platform and users of the third party online platform;
determining by the centralized server, for the artist, a numerical score based on a relation between the play count data and the fan count data, the numerical score including a classification of the artist; and
outputting the classification of the artist.

**2.** The computer-implemented method of claim 1, wherein the interactions by users of the third party online platform with content of the artist that is stored on the third party online platform comprise at least one of downloads or streams associated with the content of the artist.

**3.** The computer-implemented method of claim 1 or 2, wherein the centralized online platform obtains the play count data and the fan count data for the artist via at least one open API.

**4.** The computer-implemented method of any of claims 1 to 3, wherein the centralized online platform is connected to a plurality of different third party platforms.

**5.** The computer-implemented method of any of claims 1 to 4, further comprising determining an artist growth rate based at least in part on a temporal evolution of the numerical score of the artist, wherein the artist growth rate indicates a weighted percentage change of play count data and fan count data.

**6.** The computer-implemented method of any of claims 1 to 5, further comprising determining an artist growth score, wherein the artist growth score indicates whether the change of play count data and fan count data of the artist is growing faster than an average of multiple other artists on the centralized online platform.

**7.** A computer-readable medium having computer-executable instructions to program a computer to perform operations comprising:

obtaining by a centralized online platform, for an artist, play count data from a third party online platform, the play count data indicating a count of interactions by users of the third party online platform with content of the artist that is stored on the third party online platform;
obtaining by the centralized online platform, for the artist, fan count data from a third party online platform, the fan count data indicating a count of links between content of the artist that is stored on the third party online platform and users of the third party online platform;
determining by the centralized server, for the artist, a numerical score based on a relation between the play count data and the fan count data, the numerical score including a classification of the artist; and
outputting the classification of the artist.

**8.** The computer-readable medium of claim 7, wherein the interactions by users of the third online platform with content of the artist that is stored on the third party online platform comprise at least one of downloads or streams associated with the content of the artist.

**9.** The computer-readable medium of claim 7 or 8, wherein the centralized online platform obtains the play count data and the fan count data for the artist via at least one open API.

**10.** The computer-readable medium of any of claims 7 to 9, wherein the centralized online platform is connected to a plurality of different third party platforms.

**11.** The computer-implemented method of any of claims 7 to 10, further comprising determining an artist growth rate based at least in part on a temporal evolution of the numerical score of the artist, wherein the artist growth rate indicates a weighted percentage change of play count data and fan count data.

**12.** The computer-readable medium of any of claims 7 to 11, further comprising determining an artist growth score, wherein the artist growth score indicates whether the change of play count data and fan count data of the artist is growing faster than an average of multiple other artists on the centralized online platform.

**13.** A computing device comprising:

a processor; and
a computer-readable medium storing computer-executable instructions that, when executed by the processor, cause the processor to perform operations comprising:

obtaining, for an artist, play count data from a third party online platform, the play count data indicating a count of interactions by users of the third party online platform with content of the artist that is stored on the third party online platform;

obtaining, for the artist, fan count data from a third party online platform, the fan count data indicating a count of links between content of the artist that is stored on the third party online platform and users of the third party online platform;

determining, for the artist, a numerical score based on a relation between the play count data and the fan count data, the numerical score including a classification of the artist; and

outputting the classification of the artist.

14. The computing device of any of claim 13, wherein the operations further comprise determining an artist growth rate based at least in part on a temporal evolution of the numerical score of the artist, wherein the artist growth rate indicates a weighted percentage change of play count data and fan count data.

15. The computing device of claim 13 or 14, wherein the operations further comprise determining an artist growth score, wherein the artist growth score indicates whether the change of play count data and fan count data of the artist is growing faster than an average of multiple other artists on the centralized online platform.

FIG. 1 - Data Collection

FIG. 2 - Flow diagram of a method for computing the ADF

FIG 3.a – Lognormal Distribution of FANS

FIG. 3.b – Lognormal Distribution of PLAYS

FIG. 4 – ADF Score Ranking

FIG 5.a Artist Growth Calculation - Individual Artist

EP 3 255 592 A1

For each artist in a group of artists:

Artist
Raw Fan Count
(RFC)

Artist
Rejected from
Group
Artist Growth
Calculation — NO ← RFC Cut-Threshold Met?

YES

Calculate
Artist
Raw Plays Count
(RPC)

Artist
Rejected from
Group
Artist Growth
Calculation — NO ← RPC Cut-Threshold Met?

YES

Calculate
Artist Growth
for Specified
Time Period

For N qualified artists in a group of artists over a specified time period:

Artist Growth ARTIST 1

Growth ARTIST 2

Growth ARTIST N

Calculate
Group
Artist Growth

FIG 5.b - Artist Growth Calculation - Group of Artists

18

FIG. 6 – Artist Growth Score

600

**PROCESSING UNIT(S)**
**602**            614

BUS 606

**COMPUTER-READABLE MEDIA 604**

**OPERATING SYSTEM**
**608**

**DIGITAL FOOTPRINT TOOL**
**610**

620            622

624            626

628

**DATA STORE**
**612**

**I/O INTERFACE(S)**
**616**

**NETWORK INTERFACE(S)**
**618**

FIG. 7

Europäisches
Patentamt

European
Patent Office

Office européen
des brevets

# EUROPEAN SEARCH REPORT

Application Number

EP 16 17 3560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/118405 A1 (SILENTMUSICBAND CORP [KR]; YUN HYEONG-SIK [KR]) 9 November 2006 (2006-11-09) * the whole document * ----- | 1-15 | INV. G06Q10/04 G06Q30/02 |
| X | US 2013/238444 A1 (MUNACO SAM [US] ET AL) 12 September 2013 (2013-09-12) * the whole document * ----- | 1-15 | |
| X | WO 2014/145974 A1 (ISQUITH JACK [US]; GREEN JORDAN MICHAEL [US]; SURESH NALLAN CHAKRAVART) 18 September 2014 (2014-09-18) * the whole document * ----- | 1-15 | |

TECHNICAL FIELDS
SEARCHED     (IPC)

G06Q

The present search report has been drawn up for all claims

| Place of search | Date of completion of the search | Examiner |
|---|---|---|
| Munich | 25 August 2016 | Anastasov, Yuliyan |

EPO FORM 1503 03.82 (P04C01)

EP 3 255 592 A1

## ANNEX TO THE EUROPEAN SEARCH REPORT
## ON EUROPEAN PATENT APPLICATION NO.

EP 16 17 3560

25-08-2016

| Patent document cited in search report | | Publication date | Patent family member(s) | | Publication date |
|---|---|---|---|---|---|
| WO 2006118405 | A1 | 09-11-2006 | CN | 101167099 A | 23-04-2008 |
| | | | EP | 1877953 A1 | 16-01-2008 |
| | | | JP | 2008541149 A | 20-11-2008 |
| | | | KR | 20060114760 A | 08-11-2006 |
| | | | US | 2008215599 A1 | 04-09-2008 |
| | | | WO | 2006118405 A1 | 09-11-2006 |
| US 2013238444 | A1 | 12-09-2013 | NONE | | |
| WO 2014145974 | A1 | 18-09-2014 | NONE | | |

EPO FORM P0459

For more details about this annex : see Official Journal of the European Patent Office, No. 12/82